# EUROPÄISCHE PATENTSCHRIFT

(11) **EP 3 235 679 B1**
(45) Veröffentlichungstag und Bekanntmachung des Hinweises auf die Patenterteilung: **05.06.2019**
(21) Anmeldenummer: 16166538.5
(22) Anmeldetag: 22.04.2016
(51) Int. Cl.: B60N 2/06, F16H 57/039, F16H 57/032

(54) **GETRIEBE FÜR EINE VERSTELLEINRICHTUNG IN FAHRZEUGEN ZUM VERSTELLEN ZWEIER ZUEINANDER VERSTELLBARER FAHRZEUGTEILE**
GEARBOX FOR AN ADJUSTMENT SYSTEM IN VEHICLES FOR ADJUSTING TWO VEHICLE PARTS WHICH CAN BE ADJUSTED RELATIVE TO EACH OTHER
ENGRENAGE POUR UN DISPOSITIF DE REGLAGE DANS DES VEHICULES DESTINE A REGLER DEUX PARTIES DE VEHICULES REGLABLES

(43) Veröffentlichungstag der Anmeldung: 25.10.2017
(73) Patentinhaber: IMS Gear SE & Co. KGaA, 78166 Donaueschingen (DE)
(72) Erfinder: Riester, Donatus, 79879 Wutach (DE); Geiges, Christian, 78176 Blumberg (DE); Hengstler, Manuel, 78112 St. Georgen (DE); Fechler, Jens, 78183 Hüfingen (DE)
(74) Vertreter: Westphal, Mussgnug & Partner Patentanwälte mbB

(56) Entgegenhaltungen:
- EP-A2- 1 764 257
- WO-A1-2015/161714
- FR-A1- 2 882 974

## Beschreibung

Die vorliegende Anmeldung betrifft ein Getriebe für eine Verstelleinrichtung in Fahrzeugen zum Verstellen zweier zueinander verstellbarer Fahrzeugteile, insbesondere zum Verstellen zweier Teile einer Sitzverstelleinrichtung, eines Fensterhebers oder eines Schiebedachs, wobei das Getriebe eine antreibbare Antriebsschnecke mit einer Schneckenverzahnung, eine Spindelmutter, welche eine Spindelmutterverzahnung, die mit der Schneckenverzahnung in Eingriff steht, und ein Innengewinde aufweist, mit welchem die Spindelmutter mit einer Gewindespindel der Verstelleinrichtung in Eingriff bringbar ist, und ein Getriebegehäuse umfasst, das die Antriebsschnecke und die Spindelmutter gelagert aufnimmt. Derartige Getriebe sind aus der DE 10 2006 011 718 A1 bekannt. Weitere Getriebe sind in der EP 1 764 257 A2 und in der WO 2015/161714 A1 offenbart.

Der in einem Fahrzeug zur Verfügung stehende Bauraum ist begrenzt, so dass man bei nahezu allen Fahrzeugteilen bestrebt ist, die Dimensionen so weit wie möglich zu reduzieren. Die Getriebe, die bei der Verstellung von zwei zueinander verstellbaren Fahrzeugteilen verwendet werden, bilden keine Ausnahme. Je kleiner jedoch die Getriebe sind, desto höhere Drehzahlen sind erforderlich, um die beiden Fahrzeugteile um einen gegebenen Weg mit derselben Geschwindigkeit verstellen zu können. Die hohen Drehzahlen führen jedoch zu einer hohen Wärmeentwicklung, welche wiederum zu einem erhöhten Verschleiß oder sogar zu einem Ausfall der betreffenden Komponenten des Getriebes führen kann, wenn die Wärme nicht in einem ausreichenden Maße abgeführt wird.

Um eine ausreichende Wärmeabfuhr zu ermöglichen, ist es bekannt, die Getriebegehäuse vollständig aus Metall auszuführen. Nachteilig im Vergleich zu Getriebegehäusen aus Kunststoff sind die aufwändigere Formgebung, das erhöhte Gewicht und eine erhöhte Geräuschentwicklung aufgrund des Dämpfungsverhaltens. Da die Getriebegehäuse auch zur Lagerung der Antriebsschnecke und der Spindelmutter dienen, ist man in der Materialwahl bezüglich dieser Elemente eingeschränkt. Zwar können die Getriebegehäuse auch aus einem Kunststoff mit guter Wärmeleitfähigkeit hergestellt werden, allerdings sind diese Kunststoffe teuer, so dass sie sich für die Massenproduktion nicht eignen.

Aufgabe der vorliegenden Erfindung ist es, ein Getriebe zu schaffen, welches günstig in der Herstellung ist und gleichzeitig eine erhöhte Lebensdauer bereitstellt.

Diese Aufgabe wird mit den in den Ansprüchen 1, 11 und 12 angegebenen Merkmalen gelöst. Vorteilhafte Ausführungsformen sind Gegenstand der Unteransprüche.

Eine Ausführungsform der Erfindung betrifft ein Getriebe für eine Verstelleinrichtung in Fahrzeugen zum Verstellen zweier zueinander verstellbarer Fahrzeugteile, insbesondere zum Verstellen zweier Teile einer Sitzverstelleinrichtung, eines Fensterhebers oder eines Schiebedachs, wobei das Getriebe eine antreibbare Antriebsschnecke mit einer Schneckenverzahnung, eine Spindelmutter, welche eine Spindelmutterverzahnung, die mit der Schneckenverzahnung in Eingriff steht, und ein Innengewinde aufweist, mit welchem die Spindelmutter mit einer Gewindespindel der Verstelleinrichtung in Eingriff bringbar ist, und ein Getriebegehäuse umfasst, das die Antriebsschnecke und die Spindelmutter gelagert aufnimmt. Dabei bestehen die Spindelmutter zumindest teilweise aus Metall und die Antriebsschnecke aus Kunststoff und das Getriebegehäuse umfasst einen ersten Lagerabschnitt aus Kunststoff zum Lagern der Spindelmutter und einen zweiten Lagerabschnitt aus Metall zum Lagern der Antriebsschnecke.

Dadurch, dass die Spindelmutter zumindest teilweise aus Metall besteht, wird ein verbessertes Crashverhalten erzielt. Spindelmuttern, welche vollständig aus Kunststoff bestehen, versagen häufig bei den Kräften, welche bei einem Crash auftreten. Dies ist insbesondere dann nachteilig, wenn derartig aufgebaute Getriebe für die Verstellung von Fahrzeugsitzen eingesetzt werden. Die Fahrzeugsitze können sich bei einem Crash im Falle des Versagens der Spindelmutter unkontrolliert verschieben, wodurch die Fahrzeugpassagiere schwer verletzt werden können.

Dadurch, dass die Spindelmutter aus Metall im ersten Lagerabschnitt gelagert wird, der aus Kunststoff besteht, wird eine günstige Materialpaarung geschaffen, welche sich insbesondere in einer geringen Abrasion im Vergleich einer Lagerung in Metall bemerkbar macht und ohne zusätzliche Lagerelemente auskommt. Aus diesen Gründen ist es auch vorteilhaft, die mit der Spindelmutter in Eingriff stehende Antriebsschnecke aus Kunststoff zu fertigen, beispielsweise aus PEEK (Polyetheretherketon). Folglich ist der zweite Lagerabschnitt, in welchen die Antriebsschnecke gelagert wird, aus Metall. Neben den günstigen Materialpaarungen wird unter Verwendung von Metall für den zweiten Lagerabschnitt eine gute Wärmeabfuhr aus dem Getriebe erreicht. Dies gilt umso mehr, als dass die Antriebsschnecke üblicherweise deutlich schneller dreht als die Spindelmutter. Es ist dabei jedoch nicht notwendig, dass der erste und der zweite Lagerabschnitt so ausgestaltet sind, dass sie jeweils eine die Spindelmutter bzw. die Antriebsschnecke vollständig umringende Lagerfläche aus demselben Material bilden. Es ist ebenfalls möglich, beispielsweise eine Hälfte der Lagerfläche aus Metall und die andere Hälfte aus Kunststoff zu bilden.

Erfindungsgemäß weist das Getriebegehäuse ein erstes Gehäuseteil aus Kunststoff und ein zweites Gehäuseteil aus Metall auf, wobei der erste Lagerabschnitt ganz oder teilweise vom ersten Gehäuseteil und der zweite Lagerabschnitt ganz oder teilweise vom zweiten Gehäuseteil gebildet werden. Es ist durchaus möglich, den zweiten Lagerabschnitt aus Metall in Form von ausreichend großen Buchsen bereitzustellen, um welche das übrige Gehäuse aus Kunststoff umspritzt wird. Diese Vorgehensweise ist jedoch aus fertigungstechnischer Sicht relativ aufwendig, wodurch sich die Herstellungskosten erhöhen. In dieser Ausführungsform ist kein Umspritzen des metallischen zweiten Lagerabschnitts notwendig, vielmehr können die beiden Gehäuseteile auf eine geeignete Weise miteinander verbunden werden. Hierdurch wird die Fertigung vereinfacht, was zu einem geringeren Stückpreis des Getriebes führt.

Zusammenfassend wird ein Getriebe bereitgestellt, bei dem die Spindelmutter und die Antriebsschnecke jeweils mit einer Materialpaarung Metall/Kunststoff gelagert werden, wobei aufgrund der Lagerung der Antriebsschnecke in Metall eine gute Wärmeabfuhr ermöglicht wird. Hieraus resultieren eine erhöhte Lebensdauer und eine geringere Geräuschentwicklung des vorliegenden Getriebes.

Eine weitere Ausführungsform zeichnet sich dadurch aus, dass der zweite Lagerabschnitt zumindest eine Erstreckung aufweist, welche größer oder gleich dem größten Durchmesser der Antriebsschnecke ist.

Auch für diese Ausführungsform gilt, dass eine verbesserte Wärmeabfuhr aus dem Getriebe ermöglicht wird, die insbesondere deshalb ermöglicht werden kann, weil die höherdrehende Antriebsschnecke im zweiten Lagerabschnitt aus Metall gelagert wird, der eine besonders große Erstreckung aufweist. Hierdurch wird beispielsweise im Vergleich zu einer Lagerbuchse aus Metall eine große Fläche aus Metall bereitgestellt, über welche die Wärme aus dem Getriebe abgeführt und an die Umgebung abgegeben werden kann.

Nach Maßgabe einer weitergebildeten Ausführungsform ist das erste Gehäuseteil zum Ausbilden einer Verbindung in das zweite Gehäuseteil einbringbar oder umgekehrt. Die Möglichkeit, die beiden Gehäuseteile ineinander einzubringen, vereinfacht ebenfalls die Fertigung, da gleichzeitig eine Positionierung der beiden Gehäuseteile zueinander durch einen relativ einfachen Arbeitsschritt ermöglicht wird. Dabei kann das eine Gehäuseteil ein geringes Übermaß gegenüber dem anderen Gehäuseteil aufweisen, so dass bereits eine Vorfixierung durch Reibschluss ermöglicht wird, wodurch der nachfolgende Verbindungsschritt vereinfacht wird. Zudem wird die Wahrscheinlichkeit, dass die beiden Gehäuseteile nicht in der vorgesehenen Weise miteinander verbunden werden, verringert. Hierdurch sinkt die Ausschussquote.

In einer weiteren Ausführungsform kann das erste Gehäuseteil erste Formschlussmittel und das zweite Gehäuseteil zweite Formschlussmittel aufweisen, welche zum Ausbilden der Verbindung formschlüssig ineinander greifen. Wie zuvor bereits diskutiert, ist es grundsätzlich möglich, die beiden Gehäuseteile mittels eines Reibschlusses miteinander zu verbinden. Allerdings sind die unter Verwendung eines Reibschlusses übertragbaren Kräfte insbesondere bei Kunststoff begrenzt, da ein plastisches Verformen beim Vorpositionieren verhindert werden sollte. Die Verwendung eines Formschlusses bietet sich daher an, wobei die Flexibilität des Kunststoffes ausgenutzt werden kann, wodurch Schnappverbindungen auf eine einfache Weise bereitgestellt werden können. Formschlüssige Verbindungen haben darüber hinaus den Vorteil, dass sie dem Monteur eine eindeutige Rückmeldung darüber geben, ob die beiden zu verbindenden Gehäuseteile auch tatsächlich wie vorgesehen miteinander verbunden sind.

In einer weitergebildeten Ausführungsform kann das erste Gehäuseteil eine erste Unterschale und eine zweite Unterschale umfassen, wobei mindestens eine der Unterschalen erste Positioniermittel zum Positionieren der ersten Unterschale relativ zur zweiten Unterschale aufweist. Das erste Gehäuseteil übernimmt hauptsächlich die Lagerung der Spindelmutter. Die Spindelmutter hat üblicherweise einen im Vergleich zur Antriebsschnecke größeren Durchmesser, so dass die Verwendung der beiden Unterschalen die Fertigung aus folgendem Grund vereinfacht: Die Spindelmutter kann in die erste Unterschale eingelegt und anschließend die zweite Unterschale mit der ersten Unterschale verbunden werden. Im Vergleich zu einem einstückigen ersten Gehäuseteil wird das Einbringen der Spindelmutter vereinfacht, da keine Abschnitte des ersten Gehäuseteils den Zugang versperren.

Eine weitergebildete Ausführungsform zeichnet sich dadurch aus, dass die erste Unterschale und die zweite Unterschale mittels des zweiten Gehäuseteils miteinander befestigbar sind. In dieser Ausführungsform dient das zweite Gehäuseteil als Vorpositioniermittel, so dass der nachfolgende Verbindungsschritt vereinfacht wird, da die beiden Unterschalen bereits eindeutig zueinander positioniert sind.

Eine weitere Ausführungsform zeichnet sich dadurch aus, dass die erste Unterschale und die zweite Unterschale baugleich sind. Hierdurch wird die Anzahl von unterschiedlichen Teilen des Getriebes reduziert, wodurch die Kosten gesenkt werden können.

In einer weiteren Ausführungsform umfasst das zweite Gehäuseteil einen ersten Körper und einen zweiten Körper, wobei mindestens einer der Körper zweite Positioniermittel zum Positionieren des ersten Körpers relativ zum zweiten Körper aufweist. Auch hierdurch wird die Montage vereinfacht, da die Antriebsschnecke schon bereits fertig positioniert werden kann, bevor das zweite Gehäuseteil mit dem ersten Gehäuseteil verbunden wird.

Eine weitergebildete Ausführungsform ist dadurch gekennzeichnet, dass die ersten und/oder die zweiten Positioniermittel als Pins und hierzu korrespondierende Bohrungen ausgebildet sind. Die Verwendung von Pins und hierzu korrespondierenden Bohrungen ermöglicht ebenfalls eine besonders einfache Fertigung, da das Einbringen der Pins in die Bohrungen problemlos möglich ist. Zudem können die Pins mit einem bestimmten Übermaß gegenüber den Bohrungen ausgestattet werden, wodurch bereits eine bestimmte Vorfixierung durch Reibschluss bereitgestellt werden kann. Darüber hinaus können die Pins zum endgültigen Verbinden der betreffenden Gehäuseteile verwendet werden, beispielsweise durch Heißverstemmen oder durch Verschweißen der Pins in den Bohrungen. Dabei ist es nicht notwendig, dass die Bohrungen durchgängig sind.

In einer weiteren Ausführungsform sind der erste Körper und der zweite Körper baugleich. Auch hierdurch lässt sich die Anzahl von unterschiedlichen Bauteilen des Getriebes reduzieren, was wiederum zu geringeren Kosten und zu einer vereinfachten Lagerhaltung führt.

Eine Ausgestaltung der Erfindung betrifft eine Verstelleinrichtung in Fahrzeugen zum Verstellen zweier zueinander verstellbarer Fahrzeugteile, insbesondere zum Verstellen zweier Teile einer Sitzverstelleinrichtung, eines Fensterhebers oder eines Schiebedachs, wobei eine Gewindespindel mit dem ersten der Fahrzeugteile feststehend verbunden ist und die Verstelleinrichtung ein Getriebe nach einer der zuvor beschriebenen Ausführungsformen aufweist, dessen Spindelmutter mit ihrem Innengewinde mit der Gewindespindel in Eingriff steht und dessen Getriebegehäuse mit dem zweiten der Fahrzeugteile in dessen Verstellrichtung verstellfest verbunden ist.

Die technischen Effekte und Vorteile, die sich mit der vorschlagsgemäßen Verstelleinrichtung erreichen lassen, entsprechen denjenigen, die für das vorliegende Getriebe erörtert worden sind. Zusammenfassend sei darauf hingewiesen, dass ein Getriebe bereitgestellt wird, bei dem die Spindelmutter und die Antriebsschnecke jeweils mit einer geräusch- und abriebsarmen Materialpaarung Metall/Kunststoff gelagert werden, wobei aufgrund der Lagerung der Antriebsschnecke in Metall eine gute Wärmeabfuhr bereitgestellt wird. Hieraus resultieren eine erhöhte Lebensdauer und eine geringere Geräuschentwicklung des vorliegenden Getriebes. Hierdurch wird die Funktionstüchtigkeit der Verstelleinrichtung länger aufrecht erhalten und der Komfort erhöht.

Eine Ausführung der Erfindung betrifft einen Fahrzeugsitz eines Fahrzeugs, welcher mittels einer Verstelleinrichtung nach der zuvor beschriebenen Ausgestaltung verstellbar ist. Die technischen Effekte und Vorteile, die sich mit dem vorschlagsgemäßen Fahrzeugsitz erreichen lassen, entsprechen denjenigen, die für das vorliegende Getriebe erörtert worden sind. Zusammenfassend sei darauf hingewiesen, dass ein Getriebe bereitgestellt wird, bei dem die Spindelmutter und die Antriebsschnecke jeweils mit einer geräusch- und abriebsarmen Materialpaarung Metall/Kunststoff gelagert werden, wobei aufgrund der Lagerung der Antriebsschnecke in Metall eine gute Wärmeabfuhr bereitgestellt wird. Hieraus resultieren eine erhöhte Lebensdauer und eine geringere Geräuschentwicklung des vorliegenden Getriebes. Der Fahrzeugsitz kann über einen längeren Zeitraum auf angenehmere Weise verstellt werden.

Beispielhafte Ausführungsformen der Erfindung werden im Folgenden unter Bezugnahme auf die beigefügten Zeichnungen näher erläutert. Es zeigen
Figur 1 eine perspektivische Darstellung einer Verstelleinrichtung, in diesem Fall für eine Sitzverstellung, in welcher ein erfindungsgemäßes Getriebe verwendet werden kann,
Figur 2a) ein erstes Ausführungsbeispiel eines erfindungsgemäßen Getriebes im zusammengesetzten Zustand anhand einer perspektivischen Darstellung,
Figur 2b) das erste Ausführungsbeispiel anhand einer Explosionsdarstellung,
Figur 2c) das erste Ausführungsbeispiel anhand einer prinzipiellen Teilschnittdarstellung,
Figur 3a) ein zweites Ausführungsbeispiel eines erfindungsgemäßen Getriebes im zusammengesetzten Zustand anhand einer perspektivischen Darstellung,
Figur 3b) das zweite Ausführungsbeispiel anhand einer Explosionsdarstellung,
Figur 4a) ein drittes Ausführungsbeispiel eines erfindungsgemäßen Getriebes im zusammengesetzten Zustand anhand einer perspektivischen Darstellung,
Figur 4b) das dritte Ausführungsbeispiel anhand einer Explosionsdarstellung,
Figur 5a) ein viertes Ausführungsbeispiel eines erfindungsgemäßen Getriebes im zusammengesetzten Zustand anhand einer perspektivischen Darstellung,
Figur 5b) das vierte Ausführungsbeispiel anhand einer Explosionsdarstellung,
Figur 6a) ein fünftes Ausführungsbeispiel eines erfindungsgemäßen Getriebes im zusammengesetzten Zustand anhand einer perspektivischen Darstellung,
Figur 6b) das fünfte Ausführungsbeispiel anhand einer Explosionsdarstellung,
Figur 7a) ein siebtes Ausführungsbeispiel eines erfindungsgemäßen Getriebes im zusammengesetzten Zustand anhand einer perspektivischen Darstellung, und
Figur 7b) das siebte Ausführungsbeispiel anhand einer Explosionsdarstellung.

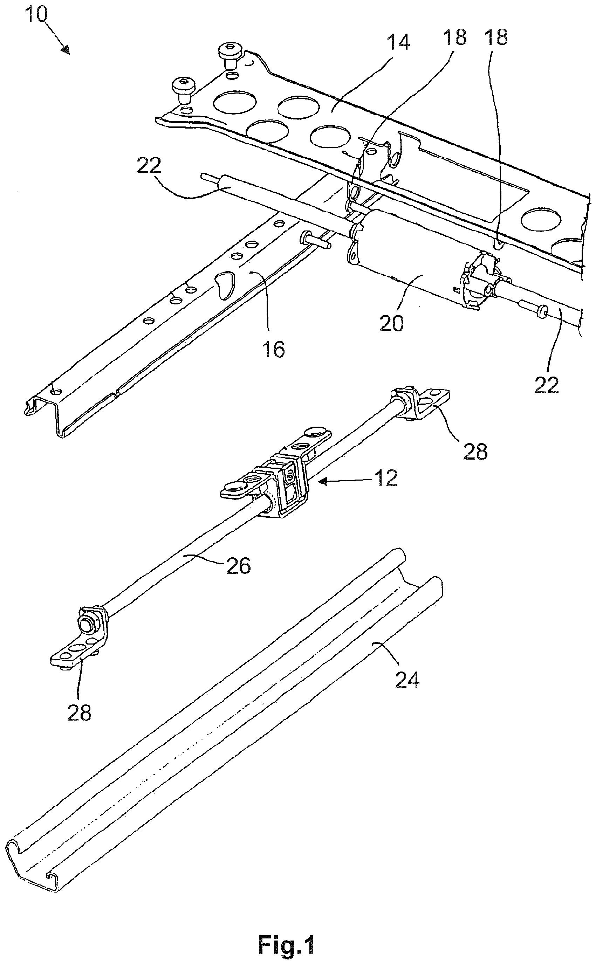

In Figur 1 ist eine perspektivische Darstellung einer Verstelleinrichtung 10 gezeigt, in diesem Fall für eine Sitzverstellung, in welcher ein erfindungsgemäßes Getriebe 12 verwendet werden kann. Die Verstelleinrichtung 10 weist eine Halteplatte 14 auf, der eine Oberschiene 16 zugeordnet ist. An der Halteplatte 14 sind Befestigungslaschen 18 für einen Antriebsmotor 20 vorgesehen, so dass der Antriebsmotor 20 fest mit der Halteplatte 14 und damit fest mit der Oberschiene 16 verbunden werden kann. Das Gestell des hier nicht dargestellten Fahrzeugsitzes wird auf der Oberschiene 16 befestigt. Beidseitig am Antriebsmotor 20 sind Antriebswellen 22 angeordnet. Diese Antriebswellen 22 stellen die Verbindung zum Getriebe 12 her, welches später noch genauer beschrieben werden wird. Die Oberschiene 16 gleitet direkt oder über nicht dargestellte Verstell- und/oder Lagerelemente auf einer am Fahrzeugboden festgelegten Unterschiene 24. In Funktionslage der Oberschiene 16 und der Unterschiene 24 werden diese so geführt, dass sich ein Hohlraum bildet. Innerhalb dieses Hohlraums ist eine Gewindespindel 26 angeordnet, welche drehfest in Halterungen 28 gelagert ist, die fest auf der Unterschiene 24 angeordnet sind. Die Gewindespindel 26 wirkt mit dem Getriebe 12 zusammen, das ebenfalls im Hohlraum angeordnet und ortsfest in der Oberschiene 16 gelagert ist. Die Unterschiene 14 und die Oberschiene 16 sind folglich ein Beispiel für zwei zueinander verstellbare Fahrzeugteile.

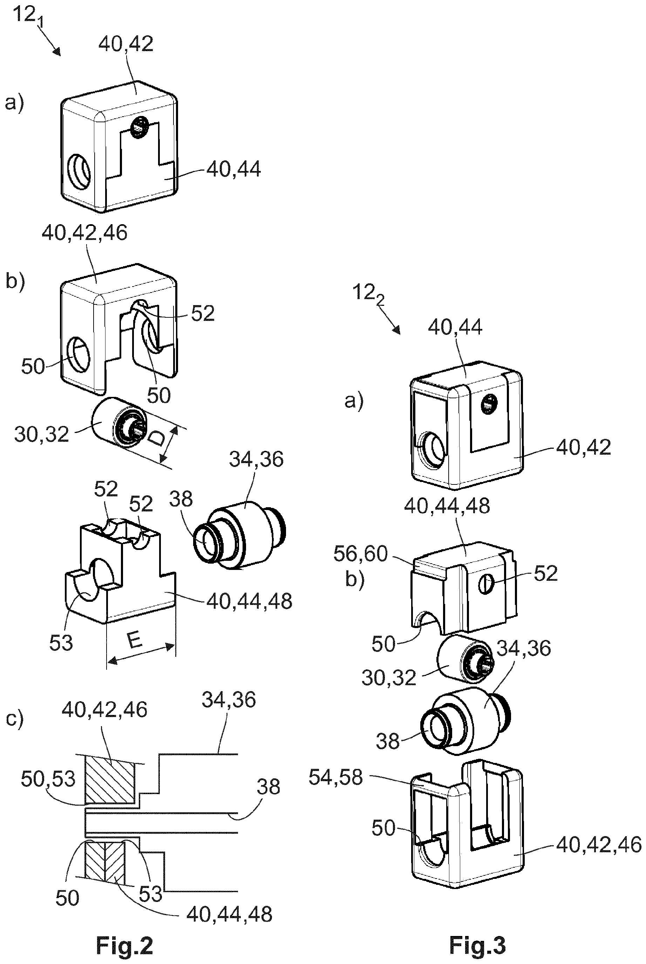

In Figur 2a) ist ein erstes Ausführungsbeispiel eines erfindungsgemäßen Getriebes 12₁ im fertig montierten Zustand und in Figur 2b) anhand einer Explosionsdarstellung gezeigt. Das Getriebe 12₁ weist eine Antriebsschnecke 30 auf, welche an ihrem äußeren Umfang eine Schneckenverzahnung 32 trägt. Im Bereich der Schneckenverzahnung 32 weist die dargestellte Antriebsschnecke 30 ihren größten Durchmesser D auf. Die Antriebsschnecke 30 ist mit den Antriebswellen 22 des Antriebsmotors 20 (vgl. Figur 1) drehfest verbindbar.

Weiterhin umfasst das Getriebe 12 eine Spindelmutter 34, welche an ihrem äußeren Umfang eine Spindelmutterverzahnung 36 aufweist. Zudem weist die Spindelmutter 34 ein Innengewinde 38 auf, welche mit der in Figur 1 dargestellten Gewindespindel 26 in Eingriff bringbar ist.

Das Getriebe 12 weist ferner ein Getriebegehäuse 40 auf, das im dargestellten Beispiel ein erstes Gehäuseteil 42 und ein zweites Gehäuseteil 44 umfasst. Das erste Gehäuseteil 42 bildet einen ersten Lagerabschnitt 46 und das zweite Gehäuseteil 44 bildet einen zweiten Lagerabschnitt 48. Der erste Lagerabschnitt 46 bildet dabei zwei erste Lagerflächen 50, die im zusammengesetzten Zustand mit den Enden der Spindelmutter 34 in Kontakt treten. Entsprechend bildet der zweite Lagerabschnitt 48 zwei zweite Lagerflächen 52, die im zusammengesetzten Zustand des Getriebes 12 mit den Enden der Antriebsschnecke 30 in Kontakt treten. Darüber hinaus wird die Spindelmutter 34 mit ihren beiden Enden zusätzlich mit weiteren Lagerflächen 53 gelagert, deren untere erste Hälfte vom zweiten Lagerabschnitt 48 und, in den Figuren 2a) und 2b) nicht erkennbar, deren obere zweite Hälfte vom ersten Lagerabschnitt 46 gebildet werden. Daher zeigt Figur 2c) eine prinzipielle, nicht maßstäbliche Darstellung durch das Getriebe 12₁ im montierten Zustand. Die vom ersten Lagerabschnitt 46 gebildeten ersten Lagerflächen 50 und weiteren Lagerflächen 53 können dabei unterbrechungsfrei ineinander übergehen. Alternativ können nicht dargestellte Absätze vorgesehen sein. Im Gegensatz dazu lassen sich die unteren Hälften der ersten Lagerflächen 50 und der weiteren Lagerflächen 53 klar voneinander unterscheiden, da, wie bereits erwähnt, die untere Hälfte der Lagerflächen 53 vom zweiten Lagerabschnitt 48 gebildet wird. Die untere Hälfte der weiteren Lagerflächen 53 besteht folglich aus Metall. Um einen verstärkten Abrieb zwischen dem zweiten Lagerabschnitt 48 und der Spindelmutter 34 in axialer Richtung und eine erhöhte Geräuschentwicklung zu vermeiden, kann der erste Lagerabschnitt 46 in axialer Richtung zum Zentrum des Getriebegehäuses 40 hin über den zweiten Lagerabschnitt 48 überstehen. Weiterhin kann die Spindelmutter 34, wie dargestellt, jeweils einen Absatz zwischen den beiden Enden und der Spindelmutterverzahnung 36 aufweisen. Folglich kommt die Spindelmutter 34 axial über ihren Absatz mit dem ersten Lagerabschnitt 46 aus Kunststoff und nicht mit dem zweiten Lagerabschnitt 48 zur Anlage, was vorteilhaft gegenüber einer axialen Anlage mit dem zweiten Lagerabschnitt 48 aus Metall ist, insbesondere deshalb, da die axial wirkenden Kräfte üblicherweise größer sind als die radial wirkenden Kräfte. Im dargestellten Beispiel bestehen die Antriebsschnecke 30 aus Kunststoff und die Spindelmutter 34 aus Metall. Dabei ist es auch möglich, dass die Spindelmutter 34 nicht vollständig aus Metall, sondern teilweise aus Metall und teilweise aus Kunststoff aufgebaut ist. Die Spindelmutter 34 ist mit ihren beiden Enden im ersten Lagerabschnitt 46 gelagert, welcher aus Kunststoff besteht. Im dargestellten Beispiel wird der erste Lagerabschnitt 46 und die erste Lagerfläche 50 vollständig vom ersten Gehäuseteil 42 gebildet, wobei das erste Gehäuseteil 42 vollständig aus Kunststoff besteht. Wie erwähnt, wird darüber hinaus die Spindelmutter 34 in diesem Ausführungsbeispiel teilweise auch im zweiten Lagerabschnitt 48 gelagert. Das erste Gehäuseteil 42 kann beispielsweise im Spritzgussverfahren hergestellt werden.

Wie bereits erwähnt, besteht die Antriebsschnecke 30 aus Kunststoff und ist mit ihren beiden Enden im zweiten Lagerabschnitt 48 gelagert. Im dargestellten Beispiel werden die zweiten Lagerflächen 52 jedoch nicht vollständig, sondern nur teilweise vom zweiten Gehäuseteil 44 gebildet, welches aus Metall besteht. Das zweite Gehäuseteil 44 kann beispielsweise im Zink-Druckgussverfahren hergestellt werden. Die zweiten Lagerflächen 52 werden auch vom ersten Gehäuseteil 42 aus Kunststoff gebildet. Die Wahl des Kunststoffes orientiert sich insbesondere an seinen Lagereigenschaften und an seinen Kosten. Als geeignete Kunststoffe haben sich POM (Polyoxymethylen), PPS (Polyphenylensulfid), PTFE (Polytetrafluorethylen) und LCP (Liquid Crystal Polymers). Der zweite Lagerabschnitt 48 umfasst nicht nur die zweiten Lagerflächen 52, mit welcher die Antriebsschnecke 30 im Betrieb in Kontakt tritt, sondern auch die Lagerstruktur, die zum Lagern der Antriebsschnecke 30 notwendig ist. In diesem Fall umfasst der zweite Lagerabschnitt 48 das gesamte zweite Gehäuseteil 44. Dabei weist der zweite Lagerabschnitt 48 zumindest eine Erstreckung E aufweist, welche größer oder gleich dem größten Durchmesser D der Antriebsschnecke 30 ist. Die Erstreckungsrichtung ist dabei nicht auf eine bestimmte Ebene beschränkt.

Zur Montage des ersten Ausführungsbeispiels des Getriebes 12₁ wird die Spindelmutter 34 in das zweite Gehäuseteil 44 eingebracht und die Antriebsschnecke 30 mit ihren beiden Enden auf das zweite Gehäuseteil 44 und insbesondere auf die untere Hälfte der zweiten Lagerflächen 52 gelegt. Anschließend wird das erste Gehäuseteil 42 über das zweite Gehäuseteil 44 gestülpt, wobei die Spindelmutter 34 so angeordnet wird, dass sie mit ihren beiden Enden mit jeweils einer der ersten Lagerflächen 50 des ersten Gehäuseteils 42 in Kontakt tritt. Anschließend werden die beiden Gehäuseteile 42, 44 miteinander verbunden, wozu jede geeignete Art der Verbindung verwendet werden kann, beispielsweise Ultraschallschweißen, Laserschweißen, Clipsen, Verstemmen, Heißverstemmen oder Vercrimpen.

In Figuren 3a) und 3b) ist ein zweites Ausführungsbeispiel des erfindungsgemäßen Getriebes 12₂ dargestellt. Auch in diesem Ausführungsbeispiel weist das Getriebegehäuse 40 das erstes Gehäuseteil 42 und das zweites Gehäuseteil 44 auf. Allerdings wird in diesem Ausführungsbeispiel die zweite Lagerfläche 52 für die Antriebsschnecke 30 vollständig vom zweiten Gehäuseteil 44 gebildet, während die erste Lagerfläche 50 für die Spindelmutter 34 jeweils zur Hälfte vom ersten Gehäuseteil 42 und vom zweiten Gehäuseteil 44 gebildet wird. Dabei weist das erste Gehäuseteil 42 erste Formschlussmittel 54 und das zweite Gehäuseteil 44 zweite Formschlussmittel 56 auf, wobei die ersten Formschlussmittel 54 als Querstege 58 ausgebildet sind, welche im montierten Zustand in korrespondierende Ausnehmungen 60 des zweiten Gehäuseteils 44 eingreifen.

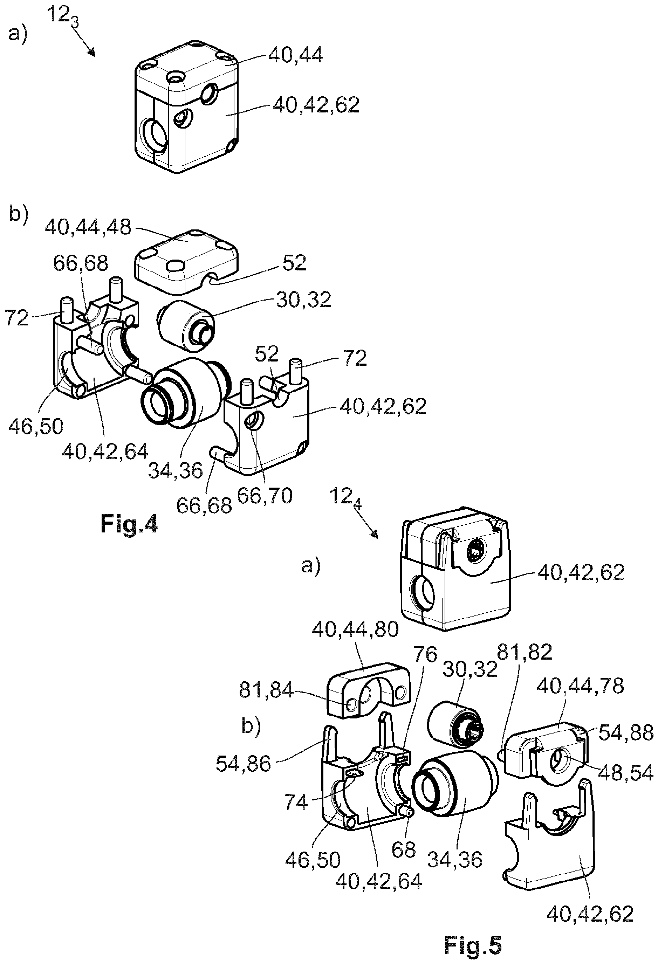

In den Figuren 4a) und 4b) ist ein drittes Ausführungsbeispiel des erfindungsgemäßen Getriebes 12₃ dargestellt, bei welchem das erste Gehäuseteil 42 eine erste Unterschale 62 und eine zweite Unterschale 64 aufweist. Die erste Unterschale 62 und die zweite Unterschale 64 sind baugleich und weisen erste Positioniermittel 66 auf, die im dargestellten Beispiel zwei Pins 68 umfassen, welche im montierten Zustand in eine entsprechende Anzahl von Bohrungen 70 eingreifen. Die beiden Unterschalen 62, 64 weisen weitere Pins 72 auf, welche senkrecht zu den Pins 68 verlaufen und auf welche das deckelförmig ausgebildete zweite Gehäuseteil 44 im verbundenen Zustand der beiden Unterschalen 62, 64 aufgesteckt werden kann, um die beiden Unterschalen 62, 64 relativ zueinander zu fixieren. In diesem Ausführungsbeispiel wird der erste Lagerabschnitt 46 und folglich die erste Lagerfläche 50 vollständig vom ersten Gehäuseteil 42 gebildet, während die zweite Lagerfläche 52 jeweils zur Hälfte vom ersten Gehäuseteil 42 und vom zweiten Gehäuseteil 44 gebildet wird.

In den Figuren 5a) und 5b) ist ein viertes Ausführungsbeispiel des erfindungsgemäßen Getriebes 12₄ dargestellt, wobei wiederum das erste Gehäuseteil 42 von der ersten Unterschale 62 und von der zweiten Unterschale 64 gebildet wird. Die Unterschalen 62, 64 sind aber im Vergleich zum dritten Ausführungsbeispiel etwas anders aufgebaut. Es ist nur ein Pin 68 pro Unterschale 62, 64 vorhanden, während anstelle des zweiten Pins eine Zunge 74 vorgesehen ist, die im verbundenen Zustand in eine entsprechend geformte Ausnehmung 76 eingreift.

Das zweite Gehäuseteil 44 weist einen ersten Körper 78 und einen zweiten Körper 80 auf, die mit zweiten Positioniermitteln 81 ausgestattet sind. In diesem Ausführungsbeispiel umfassen die zweiten Positioniermittel 81 zwei Pins 82, welche auf dem ersten Körper 78 angeordnet sind und in eine entsprechende Anzahl von Bohrungen 84 des zweiten Körpers 80 eingreifen. Der erste und der zweite Körper 78, 80 sind daher nicht baugleich.

Die erste Unterschale 62 und die zweite Unterschale 64 bilden zusammen den ersten Lagerabschnitt 46 und der erste Körper 78 und der zweite Körper 80 bilden jeweils einen der zweiten Lagerabschnitte 48.

Die beiden Unterschalen 62, 64 weisen die ersten Formschlussmittel 54 auf, welche in diesem Fall als Rastarme 86 ausgebildet sind. Die zweiten Formschlussmittel 56 sind als Absätze 88 auf dem ersten und dem zweiten Körper 78, 80 ausgebildet. Zur Montage werden der erste Körper 78 und der zweite Körper 80 des zweiten Gehäuseteils 44 so miteinander verbunden, dass die Antriebsschnecke 30 in den zweiten Lagerabschnitten 48 aufgenommen ist. Anschließend werden die erste Unterschale 62 und die zweite Unterschale 64 so miteinander verbunden, dass die Spindelmutter 34 im ersten Lagerabschnitt 46 gelagert ist. Zuletzt wird das zweite Gehäuseteil 44 auf das erste Gehäuseteil 42 gesteckt. Dabei hintergreifen die Rastarme 86 die Absätze 88, wodurch eine formschlüssige Verbindung hergestellt wird.

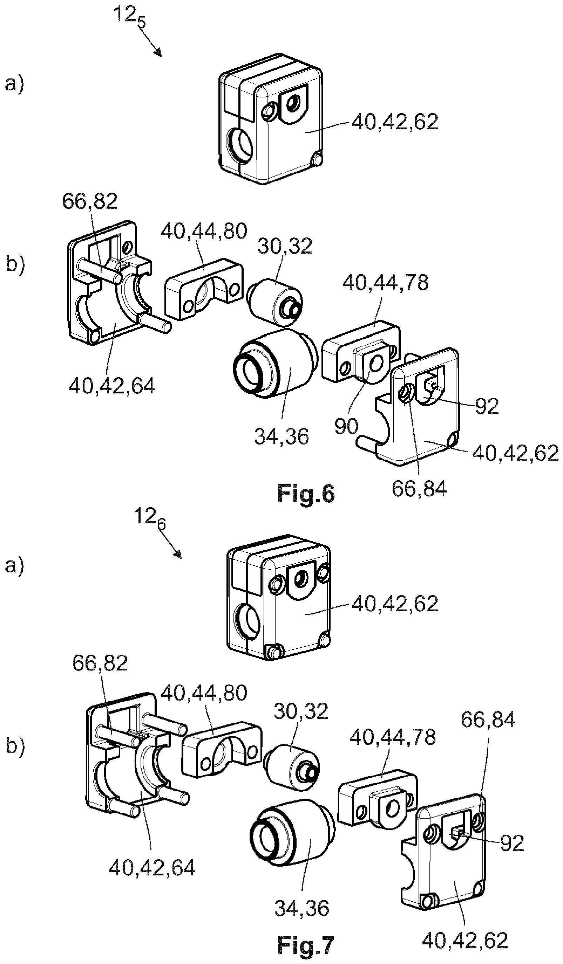

In den Figuren 6a) und 6b) ist ein fünftes Ausführungsbeispiel des erfindungsgemäßen Getriebes 12₅ dargestellt, welches einen ähnlichen Aufbau aufweist wie das Getriebe 12₄ gemäß dem vierten Ausführungsbeispiel (siehe Figur 5). Allerdings sind keine ersten Formschlussmittel 54 vorhanden. Stattdessen weisen der erste und der zweite Körper 78, 80 Erhebungen 90 auf, welche im montierten Zustand in ein Fenster 92 der jeweiligen Unterschalen 62, 64 eingreifen. Folglich werden der erste und der zweite Körper 78, 80 zwar relativ zu den jeweiligen Unterschalen 62, 64 positioniert, aber in dieser Lage nicht fixiert. Die Unterschalen 62, 64 sind baugleich, wobei die ersten Positioniermittel 66 zwei Pins 82 umfassen, die im montierten Zustand in eine entsprechende Anzahl von Bohrungen 84 auf der jeweils anderen Unterschale 62, 64 eingreifen.

In den Figuren 7a) und 7b) ist ein sechstes Ausführungsbeispiel des erfindungsgemäßen Getriebes 12₆ dargestellt, welches einen sehr ähnlichen Aufbau aufweist, wie das in Figur 6 dargestellte Ausführungsbeispiel. In diesem Fall sind jedoch die beiden Unterschalen 62, 64 nicht baugleich ausgeführt, sondern die zweite Unterschale 64 weist vier Pins 82 auf, welche in vier Bohrungen 84 der zweiten Unterschale 64 eingreifen.
- 10: Verstelleinrichtung
- 12, 12₁-12₆: Getriebe
- 14: Halteplatte
- 16: Oberschiene
- 18: Befestigungslasche

- 20: Antriebsmotor
- 22: Antriebswelle
- 24: Unterschiene
- 26: Gewindespindel
- 28: Halterung

- 30: Antriebsschnecke
- 32: Schneckenverzahnung
- 34: Spindelmutter
- 36: Spindelmutterverzahnung
- 38: Innengewinde

- 40: Getriebegehäuse
- 42: erstes Gehäuseteil
- 44: zweites Gehäuseteil
- 46: erster Lagerabschnitt
- 48: zweiter Lagerabschnitt

- 50: erste Lagerfläche
- 52: zweite Lagerfläche
- 53: weitere Lagerfläche
- 54: erste Formschlussmittel
- 56: zweite Formschlussmittel
- 58: Quersteg

- 60: Ausnehmung
- 62: erste Unterschale
- 64: zweite Unterschale
- 66: erste Positioniermittel
- 68: Pin

- 70: Bohrung
- 72: weiterer Pin
- 74: Zunge
- 76: Ausnehmung
- 78: erster Körper

- 80: zweiter Körper
- 81: zweite Positoniermittel
- 82: Pin
- 84: Bohrung
- 86: Rastarm
- 88: Absatz

- 90: Erhebung
- 92: Fenster

- D: Durchmesser
- E: Erstreckung

## Patentansprüche

1. Getriebe für eine Verstelleinrichtung (10) in Fahrzeugen zum Verstellen zweier zueinander verstellbarer Fahrzeugteile, insbesondere zum Verstellen zweier Teile einer Sitzverstelleinrichtung, eines Fensterhebers oder eines Schiebedachs, wobei das Getriebe umfasst
- eine antreibbare Antriebsschnecke (30) mit einer Schneckenverzahnung (32), und
- eine Spindelmutter (34), welche eine Spindelmutterverzahnung (36), die mit der Schneckenverzahnung (32) in Eingriff steht, und ein Innengewinde (38) aufweist, mit welchem die Spindelmutter (34) mit einer Gewindespindel (26) der Verstelleinrichtung (10) in Eingriff bringbar ist, wobei
- ein Getriebegehäuse (40) die Antriebsschnecke (30) und die Spindelmutter (34) gelagert aufnimmt,
**dadurch gekennzeichnet, dass**
- die Spindelmutter (34) zumindest teilweise aus Metall und die Antriebsschnecke (30) aus Kunststoff bestehen und
- das Getriebegehäuse (40) einen ersten Lagerabschnitt (46) aus Kunststoff zum Lagern der Spindelmutter (34) und einen zweiten Lagerabschnitt (48) aus Metall zum Lagern der Antriebsschnecke (30) umfasst,
wobei das Getriebegehäuse (40) ein erstes Gehäuseteil (42) aus Kunststoff und ein zweites Gehäuseteil (44) aus Metall aufweist, wobei der erste Lagerabschnitt (46) ganz oder teilweise vom ersten Gehäuseteil (42) und der zweite Lagerabschnitt (48) ganz oder teilweise vom zweiten Gehäuseteil (44) gebildet werden.

2. Getriebe nach Anspruch 1,
**dadurch gekennzeichnet, dass**
- der zweite Lagerabschnitt (48) zumindest eine Erstreckung (E) aufweist, welche größer oder gleich dem größten Durchmesser (D) der Antriebsschnecke (30) ist.

3. Getriebe nach einem der Ansprüche 1 oder 2,
**dadurch gekennzeichnet, dass** das erste Gehäuseteil (42) zum Ausbilden einer Verbindung in das zweite Gehäuseteil (44) einbringbar ist oder umgekehrt.

4. Getriebe nach Anspruch 3,
**dadurch gekennzeichnet, dass** das erste Gehäuseteil (42) erste Formschlussmittel (54) und das zweite Gehäuseteil (44) zweite Formschlussmittel (56) aufweisen, welche zum Ausbilden der Verbindung formschlüssig ineinander greifen.

5. Getriebe nach einem der vorherigen Ansprüche,
**dadurch gekennzeichnet, dass** das erste Gehäuseteil (42) eine erste Unterschale (62) und eine zweite Unterschale (64) umfasst, wobei mindestens eine der Unterschalen erste Positioniermittel (66) zum Positionieren der ersten Unterschale (62) relativ zur zweiten Unterschale (64) aufweist.

6. Getriebe nach Anspruch 5,
**dadurch gekennzeichnet, dass** die erste Unterschale (62) und die zweite Unterschale (64) mittels des zweiten Gehäuseteils (44) miteinander befestigbar sind.

7. Getriebe nach einem der Ansprüche 5 oder 6,
**dadurch gekennzeichnet, dass** die erste Unterschale (62) und die zweite Unterschale (64) baugleich sind.

8. Getriebe nach einem der vorherigen Ansprüche,
**dadurch gekennzeichnet, dass** das zweite Gehäuseteil (44) einen ersten Körper (78) und einen zweiten Körper (80) umfasst, wobei mindestens einer der Körper (78, 80) zweite Positioniermittel (81) zum Positionieren des ersten Körpers (78) relativ zum zweiten Körper (80) aufweist.

9. Getriebe nach Anspruch 6 oder 8,
**dadurch gekennzeichnet, dass** die ersten und/oder die zweiten Positioniermittel (66, 81) Pins (68, 82)und hierzu korrespondierende Bohrungen (70, 84) ausgebildet sind.

10. Getriebe nach Anspruch 8 oder 9,
**Dadurch gekennzeichnet, dass** der erste Körper (78) und der zweite Körper (80) baugleich sind.

11. Verstelleinrichtung (10) in Fahrzeugen zum Verstellen zweier zueinander verstellbarer Fahrzeugteile, insbesondere zum Verstellen zweier Teile einer Sitzverstelleinrichtung (10), eines Fensterhebers oder eines Schiebedachs, wobei eine Gewindespindel (26) mit dem ersten der Fahrzeugteile feststehend verbunden ist und die Verstelleinrichtung (10) ein Getriebe nach einem der vorherigen Ansprüche aufweist, dessen Spindelmutter (34) mit ihrem Innengewinde (38) mit der Gewindespindel (26) in Eingriff steht und dessen Getriebegehäuse (40) mit dem zweiten der Fahrzeugteile in dessen Verstellrichtung verstellfest verbunden ist.

12. Fahrzeugsitz eines Fahrzeugs, welcher mittels einer Verstelleinrichtung (10) nach Anspruch 11 verstellbar ist.

## Claims

1. Gear mechanism for an adjustment device (10) in vehicles, for adjusting two vehicle parts which are adjustable relative to each other, in particular for adjusting two parts of a seat adjustment device, a window lifter or a sliding roof, wherein the gear mechanism comprises
- a driveable drive worm screw (30) with a worm gear toothing (32), and
- a spindle nut (34) which comprises a spindle nut toothing (36) engaging with the worm gear toothing (32) and an internal thread (38) by which the spindle nut (34) can be brought into engagement with the threaded spindle (26) of the adjustment device (10), wherein
- a gear casing (40) receives the drive worm screw (30) and the spindle nut (34) via mountings,
**characterised in that**
- the spindle nut (34) consists at least partially of metal and the drive worm screw (30) of plastic, and
- the gear casing (40) has a first bearing portion (46) of plastic for mounting the spindle nut (34) and a second bearing portion (48) of metal for mounting the drive worm screw (30),
wherein the gear casing (40) has a first housing part (42) of plastic and a second housing part (44) of metal, wherein the first bearing portion (46) is formed fully or partially by the first housing part (42), and the second bearing portion (48) is formed fully or partially by the second housing part (44).

2. Gear mechanism according to claim 1, **characterised in that** the second bearing portion (48) has at least an extent (E) which is greater than or equal to the greatest diameter (D) of the drive worm screw (30).

3. Gear mechanism according to claim 1 or 2, **characterised in that** the first housing part (44) can be introduced into the second housing part (44) or vice versa in order to form a connection.

4. Gear mechanism according to claim 3, **characterised in that** the first housing part (42) comprises first form-fit means (54) and the second housing part (44) comprises second form-fit means (56) which engage in each other by form fit to form the connection.

5. Gear mechanism according to any of the preceding claims, **characterised in that** the first housing part (42) has a first sub-shell (62) and a second sub-shell (64), wherein at least one of the sub-shells comprises first positioning means (66) for positioning the first sub-shell (62) relative to the second sub-shell (64).

6. Gear mechanism according to claim 5, **characterised in that** the first sub-shell (62) and the second sub-shell (64) can be fixed together by means of the second housing part (44).

7. Gear mechanism according to one of claims 5 or 6, **characterised in that** the first sub-shell (62) and the second sub-shell (64) are structurally identical.

8. Gear mechanism according to any of the preceding claims, **characterised in that** the second housing part (44) has a first body (78) and a second body (80), wherein at least one of the bodies (78, 80) comprises second positioning means (81) for positioning the first body (78) relative to the second body (80).

9. Gear mechanism according to claim 6 or 8, **characterised in that** the first and/or the second positioning means (66, 81) are formed as pins (68, 82) and corresponding bores (70, 84).

10. Gear mechanism according to claim 8 or 9, **characterised in that** the first body (78) and the second body (80) are structurally identical.

11. Adjustment device (10) in vehicles, for adjusting two vehicle parts which are adjustable relative to each other, in particular for adjusting two parts of a seat adjustment device (10), a window lifter or a sliding roof, wherein a threaded spindle (26) is fixedly connected to the first of the vehicle parts, and the adjustment device (10) comprises a gear mechanism according to any of the preceding claims, in which the internal thread (38) of the spindle nut (34) engages with the threaded spindle (26), and in which the gear casing (40) is connected to the second of the vehicle parts so as to be fixed in its setting in its adjustment direction.

12. Vehicle seat of a vehicle, which can be adjusted by means of an adjustment device (10) according to claim 11.

## Revendications

1. Transmission destinée à un dispositif de réglage (10) d'un véhicule permettant de régler deux composants du véhicule réglables l'un par rapport à l'autre, en particulier de régler deux composants d'un dispositif de réglage de siège, d'un lève-vitre ou d'un toit coulissant, la transmission comprenant :
- une vis sans fin d'entraînement (30) pouvant être entraînée ayant une denture de vis sans fin (32), et
- un écrou de broche (34) qui comporte une denture d'écrou de broche (36) qui est en prise avec la denture de la vis sans fin (32) et un filetage interne (38) avec lequel l'écrou de broche (34) peut être mis en prise avec une broche filetée (26) du dispositif de réglage (10),
- la vis sans fin d'entraînement (30) et l'écrou de broche (34) étant montés dans un carter de transmission (40),
**caractérisée en ce que**
- l'écrou de broche (34) est au moins en partie réalisé en métal et la vis sans fin d'entraînement (30) est réalisée en matériau synthétique, et
- le carter de la transmission (40) comporte un premier segment de palier (46) en matériau synthétique permettant le montage de l'écrou de broche (34) et un second segment de palier (48) en métal permettant le montage de la vis sans fin d'entraînement (30),
le carter de la transmission (40) comprend une première partie de carter (42) en matériau synthétique et une seconde partie de carter (44) en métal, le premier segment de palier (46) étant totalement ou partiellement formé par la première partie du carter (42) et le second segment de palier (48) étant totalement ou partiellement formé par la seconde partie du carter (44).

2. Transmission conforme à la revendication 1,
**caractérisée en ce que**
le second segment de palier (48) a au moins une extension (E) qui est supérieure ou égale au plus grand diamètre (D) de la vis sans fin d'entraînement (30).

3. Transmission conforme à l'une des revendications 1 et 2,
**caractérisée en ce que**
la première partie du carter (42) peut être introduite dans la seconde partie du carter (44) pour former une liaison ou inversement.

4. Transmission conforme à la revendication 3,
**caractérisée en ce que**
la première partie du carter (42) comporte des premiers moyens de liaison par la forme (54) et la seconde partie du carter (44) comporte des seconds moyens de liaison par la forme (56) qui viennent en prise les uns dans les autres par une liaison par la forme pour former la liaison.

5. Transmission conforme à l'une des revendications précédentes,
**caractérisée en ce que**
la première partie du carter (42) comporte une première coque inférieure (62) et une seconde coque inférieure (64), et au moins l'une des coques inférieures comporte des premiers moyens de positionnement (66) permettant de positionner la première coque inférieure (62) par rapport à la seconde coque inférieure (64).

6. Transmission conforme à la revendication 5,
**caractérisée en ce que**
la première coque inférieure (62) et la seconde coque inférieure (64) peuvent être fixées l'une à l'autre au moyen de la seconde partie du carter (44).

7. Transmission conforme à l'une des revendications 5 et 6,
**caractérisée en ce que**
la première coque inférieure (62) et la seconde coque inférieure (64) sont identiques.

8. Transmission conforme à l'une des revendications précédentes,
**caractérisée en ce que**
la seconde partie du carter (44) comporte un premier corps (78) et un second corps (80), au moins l'un des corps (78, 80) comprenant des seconds moyens de positionnement (81) permettant de positionner le premier corps (78) par rapport au second corps (80).

9. Transmission conforme à la revendication 6 ou 8,
**caractérisée en ce que**
les premiers moyens de positionnement et/ou les seconds moyens de positionnement (66, 81) sont constitués par des goupilles (68, 82) et des perçages (70, 84) correspondant à celles-ci.

10. Transmission conforme à la revendication 8 ou 9,
**caractérisée en ce que**
le premier corps (78) et le second corps (80) sont identiques.

11. Dispositif de réglage (10) dans des véhicules permettant de régler deux composants du véhicule réglables l'un par rapport à l'autre, en particulier de régler deux composants d'un dispositif de réglage de siège (10), d'un lève-vitre ou d'un toit coulissant, dans lequel une broche filetée (26) est reliée solidairement au premier des composants du véhicule, et le dispositif de réglage (10) comporte une transmission conforme à l'une des revendications précédentes dont l'écrou de broche (34) vient en prise par son filetage interne (38) avec la broche filetée (26), et dont le carter de transmission (40) est relié solidairement au second des composants du véhicule dans sa direction de réglage.

12. Siège d'un véhicule réglable au moyen d'un dispositif de réglage (10) conforme à la revendication 11.
